# EUROPÄISCHE PATENTSCHRIFT

(11) **EP 1 135 279 B1**
(45) Veröffentlichungstag und Bekanntmachung des Hinweises auf die Patenterteilung: **10.12.2003**
(21) Anmeldenummer: 99947483.6
(22) Anmeldetag: 08.10.1999
(51) Int. Cl.: B60R 21/12, B60R 13/02, F41H 7/04

(54) **Beschussfestes Innenverkleidungsteil für ein Kraftfahrzeug**
Bullet-proof Inner Lining Parts for a Motor Vehicle
Elément de revêtement interne blindé destiné à un véhicule

(30) Priorität: 07.12.1998 DE 19856250
(43) Veröffentlichungstag der Anmeldung: 26.09.2001
(73) Patentinhaber: AUDI AG, 85045 Ingolstadt (DE)
(72) Erfinder: NEFF, Johann, D-82211 Herrsching (DE); BURKHARDT, Boris, D-85049 Igolstadt (DE)
(74) Vertreter: Engelhardt, Harald
(86) Internationale Anmeldenummer: EP9907548
(87) Internationale Veröffentlichungsnummer: WO00034081

(56) Entgegenhaltungen:
- EP-A1- 0 658 738
- DE-A1- 19 900 716
- DE-C1- 19 729 979

## Beschreibung

Die Erfindung betrifft ein beschussfestes Kraftfahrzeug-Innenverkleidungsteil gemäß dem Oberbegriff des Patentanspruchs 1.

Ein gattungsbildendes beschussfestes Kraftfahrzeug-Innenverkleidungsteil als Leichtpanzerelement ist bekannt geworden aus der DE 197 29 979 C1 (B 60 R 21/12). Zur Erhöhung der Beschusssicherheit ist dort insbesondere am Beispiel einer C-Säulenverkleidung gezeigt, wie durch Aufkleben oder Einbetten eines Stahlblechstreifens an einem abgewinkelten Randbereich eines flächigen Faserverbundkörpers ein das Außenblech der Karosserie durchschlagendes Geschoss wirkungsvoll so abgefangen oder abgelenkt werden kann, dass die im Fahrzeug befindlichen Insassen nicht gefährdet sind. Mit einer solchen Anordnung soll vermieden werden, dass sich bei einem Beschuss der abgewinkeltete Randbereich des Faserverbundkörpers aufbiegt und durch den entstehenden Spalt oder den besonders gefährdeten Winkelbereich des Faserverbundkörpers durchschlagend in den Fahrzeuginnenraum eindringen kann. Der Faserverbundkörper bildet hierbei jedoch bis zum äußersten Rand den Randbereich des Innenverkleidungsteils in den als Materialdoppelung der Stahlblechstreifen eingebettet oder aufgeklebt ist. Somit ist hier im Randbereich eine ungünstig große Materialstärke, die ein schwerfälliges Design gegenüber serienmäßigen Innenverkleidungsteilen bedingt und zu einer aufwendigen Anschlusstechnik über mit dem Stahlblechstreifen verbundenen Laschen führt, wobei serienmäßige Anschlusstechniken nicht verwendbar sind.

Bei einer ähnlichen bekannten Ausbildung eines beschussfesten Kraftfahrzeug-Innenverkleidungsteils (DE 199 00 716 A1; nicht vor veröffentlichtes Dokument) sind ebenfalls Stahlblechelemente in abgewinkelten Randbereichen eines flächigen Faserverbundkörpers eingebettet, so dass auch hier die vorstehend genannten Nachteile auftreten. Diese eingebetteten Stahlblechelemente stehen hier zum Teil mit kunststoffummantelten Randstegen geringfügig aus dem Faserverbundkörper vor, um gegebenenfalls Spalte abzudecken. Der Anschluss dieser Innenverkleidungsteile an Karosserieteile erfolgt jedoch nicht über die Stahlblechelemente sondern in aufwendiger Weise weit vom Rand nach Innen versetzt über spezielle Befestigungselemente.

Der Erfindung liegt die Aufgabe zugrunde, gattungsgemäße Innenverkleidungsteile hinsichtlich der randseitigen Materialstärke und der Anschlusstechnik zu verbessern.

Diese Aufgabe wird gelöst mit einem beschussfesten Kraftfahrzeug-Innenverkleidungsteil der eingangs genannten Art in Kombination mit den kennzeichnenden Merkmalen des Patentanspruchs 1. Die Unteransprüche betreffen besonders zweckmäßige Weiterbildungen.

Gemäß kennzeichen des Anspruchs 1 ist das Stahlblechelement mit einem randseitigen Halteabschnitt mit dem Randbereich des flächigen Faserverbundkörpers verbunden, wobei das Stahlblechelement einen Randbereich des Innenverkleidungsteils bildet, indem es mit einem zur Anlage und für eine Festlegung an einem Karosserieteil hergerichteten Flanschabschnitt und einem Verbindungsabschnitt zwischen dem Flanschabschnitt und dem Halteabschnitt eine randseitig abstehende Fortsetzung des flächigen Faserverbundkörpers bildet.

Mit einem derartig ausgeführten Stahlblechelement können Innenverkleidungsteile geschaffen werden, denen man die Panzerung durch bloßen Augenschein nicht ansieht. Durch die Ausbildung eines vorzugsweise von einer Gummidichtung beaufschlagbaren Flanschabschnittes wird in den äußersten Randbereichen des Innenverkleidungselementes eine geringe Baudicke erreicht, die von konventionellen Innenverkleidungsteilen praktisch nicht abweicht. Die gemeinsame Abdeckung des Stahlblechelementes und des Faserverbundwerkstoffes kann optisch so hochwertig ausgeführt werden, dass der Übergang vom Faserverbundwerkstoff auf den Stahlblechstreifen äußerlich überhaupt nicht erkennbar ist.

Von herausgehobener Bedeutung ist auch, daß das Stahlblechelement direkt an Karosserieteilen des Fahrzeuges festlegbar ist. Durch direkte Anlage des Flanschabschnittes beispielsweise auf die Innenbleche von Türen oder Seitenwänden kann in konventioneller Weise das als Leichtpanzerelement ausgeführte Innenverkleidungsteil wie ein konventionelles ungepanzertes Innenverkleidungsteil montiert und befestigt werden, und zwar vorzugsweise in den identischen Karosserielochungen von Serienfahrzeugen.

Das erfindungsgemäße Konzept kann grundsätzlich an allen Innenverkleidungsteilen verwirklicht werden, also über die bereits genannten Seitenwand und Türverkleidungen hinaus auch noch in Säulenverkleidungen, Dachhimmeln, Hutablagen und gegebenfalls auch Bodenbelägen.

In produktionstechnischer Hinsicht besonders vorteilhaft ist ein Stahlblechelement, das als geschlossener Rahmen einteilig ausgeführt ist und beispielsweise in einem Tiefziehwerkzeug so geformt und gelocht wird, daß es nach einer oder mehreren Ziehstufen bereits auf Fertigmaß gebracht worden ist. Der auf diese Weise hergestellte Rahmen kann dann zentriert in eine Werkzeugformschale zur Einbettung in Faserverbundschichten aus Polyethylen- oder Aramid-Fasern eingelegt werden. Nach der Aushärtung der Faserverbundwerkstoffe erhält man so ein einteilig erscheinendes Bauteil, das anschließend mit einem Dekorbezug verkleidet werden kann. Diesbezüglich von herausgehobener Bedeutung sind Rücksetzungen am Innenrand und am Außenrand des Stahlblechelementes. Die Rücksetzung am äußeren Rand des Flanschabschnittes ermöglicht ein Umschlagen des Dekorbezuges in der Weise, daß zum einen der Flanschabschnitt satt und damit dichtend an dem Karosserieteil aufliegen kann und zum anderen der äußere Rand des Dekorbezuges sauber umgeschlagen werden kann. Die Rücksetzung am Halteabschnitt ermöglicht einen stufenlosen Übergang vom Faserverbundwerkstoff auf das Stahlblechelement, so daß der Übergangsbereich zwischen diesen beiden Komponenten eben ausgeführt ist.

Ein ganz wesentlicher Vorteil der Erfindung ist unter anderem darin zu sehen, daß insbesondere auch für die beschußkritischen Abschnitte im Bereich von Deckelfugen große Umfänge der bislang direkt an dem Fahrzeugaufbau erforderlichen Panzerungen entfallen können. Damit entfällt beispielsweise das Einschweißen zusätzlicher Verstärkungsplatten an Rohbauteilen, was in der Regel sehr arbeitsintensiv ist und bereits in einem recht frühen Stadium der Fahrzeugproduktion vorgenommen werden muß. Bei Einsatz der erfindungsgemäßen Innenverkleidungsteile können damit insbesondere bei der Rohbauerstellung große Arbeitsumfänge entfallen. Für die Herstellung leichtgepanzerter Fahrzeuge kann man also auch diesbezüglich weitgehend auf den Serienstand von bereits in Produktion befindlichen Großserienfahrzeugen zurückgreifen.

Als besonders vorteilhaft wird die Ausbildung des Stahlblechelementes als Mehrschichtkörper vorgeschlagen, um so beispielsweise die Formgebung zu erleichtern. Diese Konzeption geht von der erfinderseitigen Überlegung aus, daß drei Blechschichten von je 1 mm Dicke mit wesentlich geringerem Werkzeugaufwand tiefgezogen und gelocht werden können als beispielsweise eine einzelne Platine mit einer Stärke von 3 mm. Mit der Mehrschichtausführung können darüber hinaus in den einzelnen Schichten die Materialien variiert werden. Vorgeschlagen wird für die dem Beschuß als erstes ausgesetzte Lage ein sehr harter und damit schlagfester Werkstoff. Demgegenüber sind die hinteren Lagen wesentlich zäher. Ballistisch können Vorteile dahingehend erzielt werden, daß die Rißinduktion nach Auftreten eines Geschosses zunächst an der Grenzschicht aufgehalten wird und dann an der nächsten Schicht neu beginnen muß. Ein derartig aufgebauter Schichtkörper baut damit am Geschoß deutlich mehr kinetische Energie ab als ein Einschichtkörper. Fertigungstechnisch besonders einfach ist die Ausgestaltung des Schichtkörpers als Stapelpaket, das vorzugsweise nur durch Einbettung in den Faserverbundkörper und/oder den Durchgriff von Befestigungselementen im Bereich des Flanschabschnittes zusammengehalten wird.

Vorteilhafte Ausführungsbeispiele der Erfindung sind in der Zeichnung dargestellt. Es zeigt:
- Figur 1:: für eine erste Lösungsvariante in einer ausschnittsweisen Darstellung ein beschußfestes Innenverkleidungsteil im verbauten Zustand,

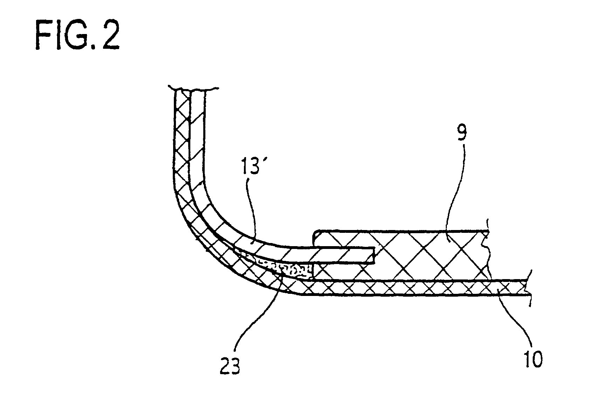

- Figur 2:: für den in Figur 1 mit II angegebenen Ausschnitt eine Alternative,
- Figur 3:: ein als geschlossenen Rahmen ausgeführtes Stahlblechelement,
- Figur 4:: in einer mit Figur 1 vergleichbaren Darstellung eine zweite Lösungsvariante.

Gleiche Bauteile oder Bauteilabschnitte weisen in allen Figuren die gleiche Bezifferung auf.

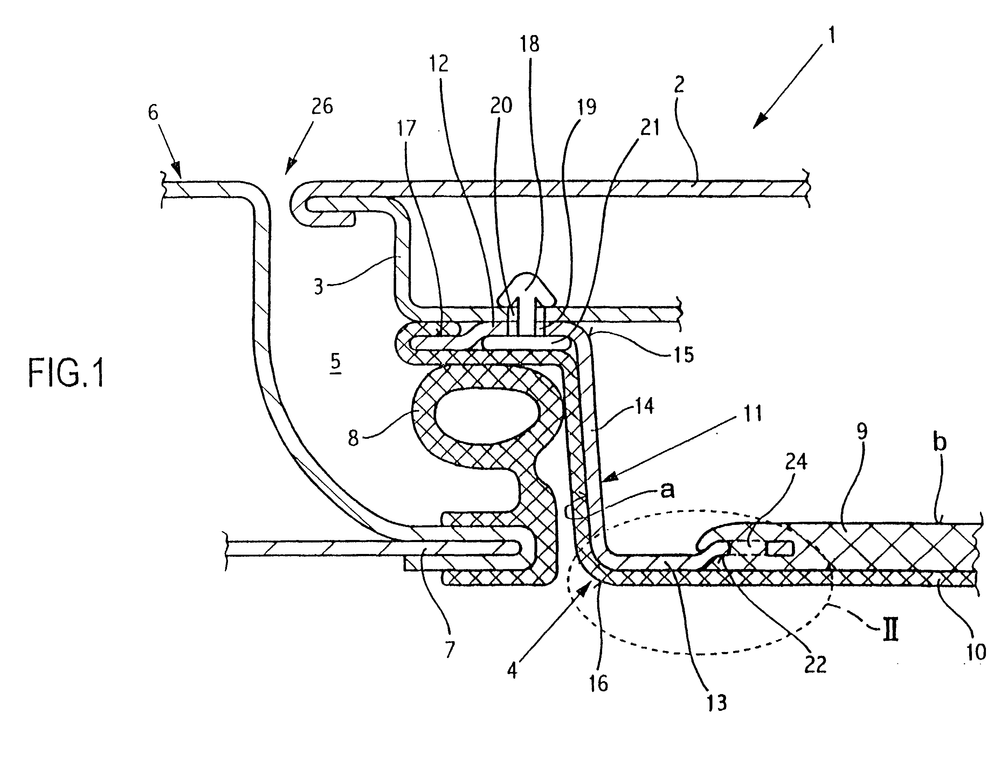

Als typische Einbausituation zeigt Figur 1 hier den Randbereich einer insgesamt mit 1 bezeichneten Seitentür, deren wesentliche Elemente ein Außenblech 2, ein Innenblech 3 und ein insgesamt mit 4 bezeichnetes Innenverkleidungsteil sind. Die Seitentür 1 ist in herkömmlicher Weise in eine Mulde 5 der hier ebenfalls nur ausschnittsweise dargestellten Fahrzeugkarosserie 6 eingesetzt. Zu letzterer gehört hier ein umlaufender Stehflansch 7, auf dem eine konventionelle Schlauchdichtung 8 selbstklemmend befestigt ist.

Wesentliche Bestandteile des beschußfesten Innenverkleidungsteiles 4 sind ein hier einteilig ausgeführter Faserverbundkörper 9, ein Dekorbezug 10 sowie ein insgesamt mit 11 bezeichnetes Stahlblechelement. Dessen in der Querschnittssicht wesentliche Abschnitte sind ein dem Innenblech 3 zugeordneter und an diesem auch aufliegender Flanschabschnitt 12, ein in den Faserverbundkörper 9 zumindest teilweise eingebetteter Halteabschnitt 13 und ein zwischen diesen Abschnitten angeordneter Verbindungsabschnitt 14. Aus ziehtechnischen Gründen sind hier Übergangsbereiche 15 und 16 zwischen den einzelnen Abschnitten gerundet.

An dem Flanschabschnitt 12 ist eine erste Rücksetzung 17 vorgesehen, deren Abstand zum Innenblech 3 so gewählt worden ist, daß der äußere Rand des Dekorbezuges 10 ohne Quetschungen umgeschlagen werden kann. Außerdem ist in dem Flanschabschnitt 12 eine von einem Halteclip 18 durchdrungene Bohrung 19 vorgesehen, die hinsichtlich ihrer Lage auf dem Stahlblechelement 11 mit einer Lochung 20 im Innenblech 3 korrespondiert. Ein Haltekopf 21 des Halteclips 18 ist so ausgeführt, daß er zusammen mit der dem Innenraum zugewandten Seite der Rücksetzung 17 in etwa eine ebene Fläche bildet. Bei fertig bezogenem Innenverkleidungsteil 4 sind damit nach außen keine Einfallstellen erkennbar. Als Alternative zu den Halteclipsen 18 können auch für den Einsatz in die Lochungen 20 hergerichtete Rastelemente nach Art von abgestellten Flanschen am Stahlblechelement 11 direkt angeformt sein.

Eine zweite Rücksetzung 22 im Übergangsbereich zur Einbettung im Faserverbundkörper 9 ermöglicht ebenfalls die Darstellung einer ebenen Fläche, damit nach Kaschieren mit dem Dekorbezug 10 weder Einfallstellen noch optisch als negativ zu bewertende Falten erkennbar sind. Abweichend zu der in Figur 1 dargestellten Ausführung kann gegebenenfalls auch eine Beschichtungsmasse 23 zum Höhenausgleich am Übergangsbereich vom Faserverbundkörper 9 zum Halteabschnitt 13' vorgesehen werden. Da Panzerfahrzeuge in verhältnismäßig kleinen Stückzahlen hergestellt werden, kann dieser in der Regel manuell zu erbringende Zusatzaufwand gegebenenfalls kostengünstiger sein als die Einarbeitung von Rücksetzungen in Tiefziehwerkzeugen.

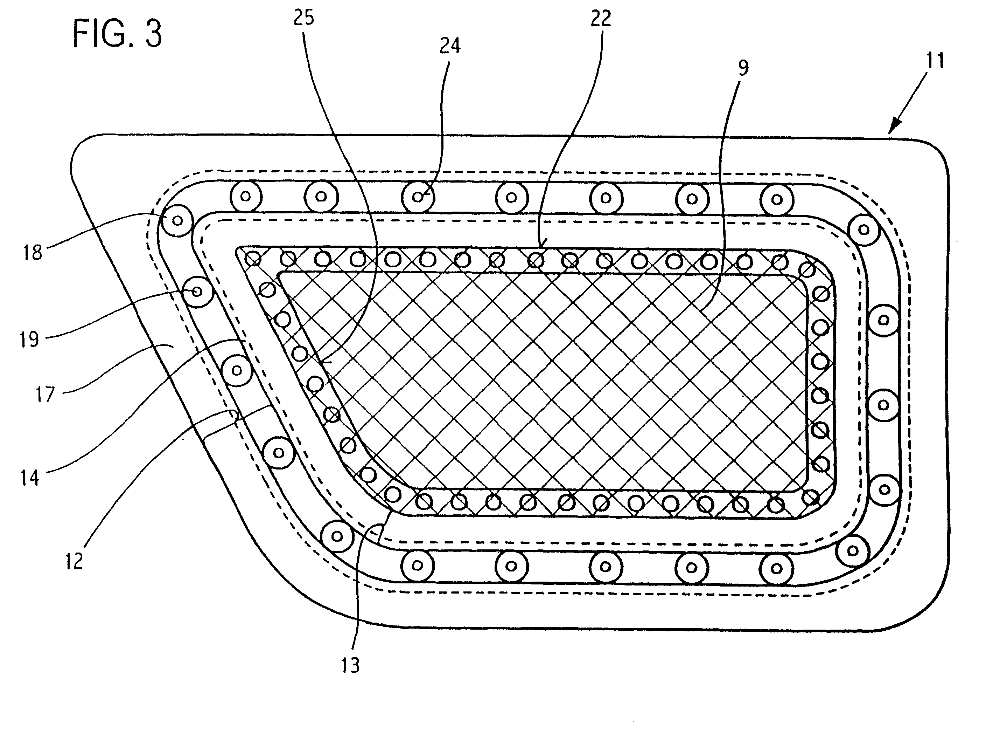

Hervorzuheben bei dem Ausführungsbeispiel in Figur 1 ist auch eine Lochung 24 im Bereich der Einbettung des Halteabschnittes 13. Diese insgesamt als Lochkette oder Kammstruktur ausgeführte Lochung oder Durchbrechung im Bereich eines Innenrandes 25 (siehe Figur 3) sorgt dafür, daß Faserverbundwerkstoff praktisch verzahnend das als eingebetteten Rahmen ausgeführte Stahlblechelement 11 partiell durchdringt und damit für einen besonders wirkungsvollen Halt sorgt. Aus Gründen der Übersichtlichkeit sind die einzelnen Konturbereiche und Lochungen nur jeweils einmal beziffert.

Figur 3 zeigt einen Zusammenbau aus dem hier als geschlossenen Rahmen ausgeführten Stahlblechelement 11 und dem Faserverbundkörper 9. Nach Einsetzen der vorzugsweise vormontierbaren Halteclips 18 und anschließender Beschichtung mit dem Dekorbezug 10 kann das dann fertige Innenverkleidungsteil 4, das hier die Kontur einer Türverkleidung aufweist, in den fertig lackierten Türrohbau eingesetzt werden. Von herausgehobener Bedeutung ist die Tatsache, daß die Lochungen 19 und die Halteclips 18 sowohl hinsichtlich des gesamten Lochbildes auf dem gesamten Innenverkleidungsteil 4 als auch bezogen auf ihre sonstigen Anschlußmaße identisch mit ungepanzerten Verkleidungsteilen sind. Damit können insbesondere auch bereits im Betrieb befindliche Serienfahrzeuge zumindest abschnittsweise noch mit einer Leichtpanzerung nachgerüstet werden, wenn dies für den Halter eines Fahrzeuges im Einzelfall von besonderem Interesse ist.

Von herausgehobener Bedeutung ist auch die Gestaltung des Flanschabschnittes 13. Dieser baut insgesamt nur sehr gering auf, so daß beispielsweise bei Einbau erfindungsgemäßer Innenverkleidungsteile 4 die Dichtung 8 ebenfalls aus dem Serienumfang einer laufenden Fahrzeugproduktion übernommen werden kann.

Die mit den Buchstaben a und b angedeuteten Geschoßbahnen machen überdies deutlich, daß sowohl beim Durchschießen einer Karosseriefuge 26 als auch beim Durchschlagen des Außenbleches 2 jeweils immer ein wirkungsvoller Schutz bereitgestellt wird. Der Verbindungsabschnitt 14 übernimmt hier im Fugenbereich also eine Sicherheitsfunktion, die bislang nur nachträglich aufgeschweißte Panzerplatten am Rohbau erbracht haben. Für Innenverkleidungsteile, die insbesondere Karosseriedeckeln zugeordnet sind, fällt der Verbindungsabschnitt 14 relativ groß aus. Der Halteabschnitt 13 und der Flanschabschnitt 12 sind also relativ weit voneinander beabstandet. Vorstellbar sind allerdings auch Einbausituationen, bei denen der Flanschabschnitt 13 nahezu übergangslos in den Flanschabschnitt 12 übergeht. Der in Figur 1 nach Art einer Treppenstufe gebildete Querschnitt des Stahlblechelementes 11 kann im Einzelfall also auch nach Art eines Flachstreifens gebildet sein. Wichtig für die erfindungsgemäße Konzeption ist in diesem Falle der Umstand, daß der für die Befestigung des gesamten Innenverkleidungselementes 4 vorgesehene Flanschabschnitt 12 zumindest abschnittsweise aus der Einbettung des Faserverbundkörpers 9 nackt heraustritt und dann direkt mit dem Dekorbezug 10 überzogen werden kann, um so in den Randbereichen der Verkleidungsteile das Bauvolumen möglichst gering halten zu können und damit die Einpassung in umgebende Serienverkleidungen erleichtert wird.

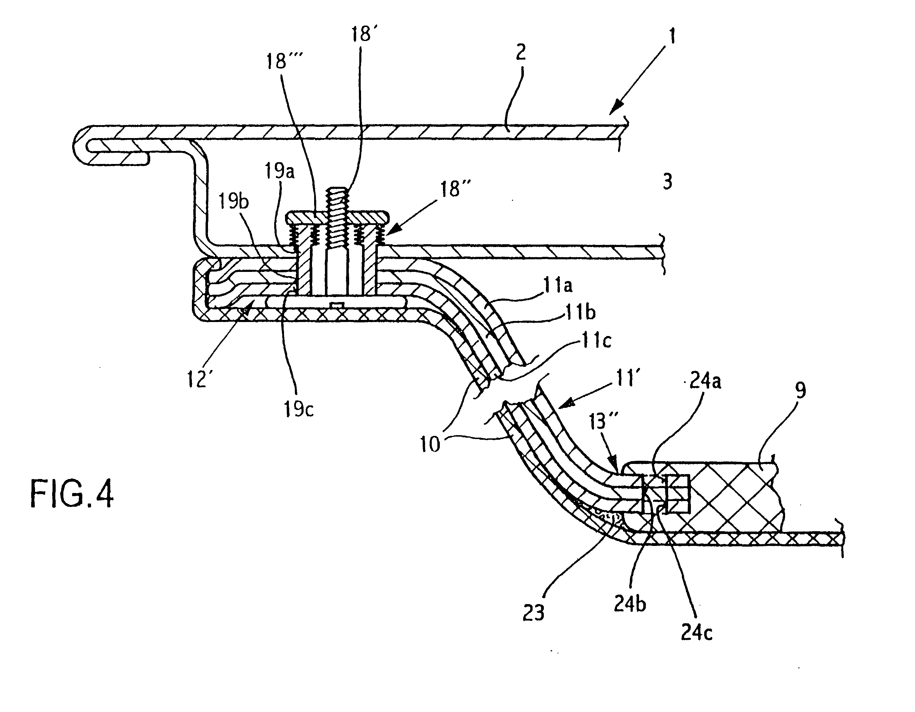

Das Ausführungsbeispiel in Figur 4 zeigt als Stahlblechelement einen Mehrschichtkörper 11 ' mit einer schlagharten Blechschicht 11a und mit zähen Blechschichten 11b und 11 c. Die Blechschichten sind bevorzugt - aber nicht zwingend - als Stapelteile ausgeführt und damit in einer identischen Werkzeugform herstellbar. Miteinander verbunden werden die Blechschichten 11a, 11 bund 11 c im Bereich des Halteabschnittes 13" durch Einbettung in den Faserverbundkörper 9. Die zuvor eingebrachten Lochungen 24a, 24b und 24c sorgen für einen verzahnenden Eingriff mit dem Faserverbundkörper 9 und legen auch die Zuordnung der Blechschichten 11a, 11b bund 11c zueinander eindeutig fest. Die Befestigung der Blechschichten 11a, 11b und 11 c im Bereich des Flanschabschnittes 12' erfolgt hier beispielsweise mittels einer Quetschhülse 18" oder mittels eines hier nicht weiter dargestellten Spreizclips, die beziehungsweise der sowohl den Mehrschichtkörper 11' als auch das Innenblech 3 durchdringt. Das als Schraube oder Spreizkörper ausgeführte Befestigungselement 18' ist so ausgelegt, daß eine eindeutige Fixierung der Blechschichten 11a, 11b, 11c gegen das Innenblech 3 erfolgt. Ergänzend oder alternativ zu der in Figur 4 dargestellten Befestigung können aber beispielsweise auch sowohl im Bereich der Lochungen 24a, 24b, 24c als auch im Bereich von Lochungen 19a, 19b, 19c Vernietungen vorgesehen werden, um dann das Stapelpaket wie einen einteiligen Zusammenbau weiterbehandeln zu können. Außerdem können zwei Schichten beispielsweise durch Walzplattieren oder Auftragsbeschichtung mit verschleißfestem Material zu einem einteiligen Verbundkörper zusammengefaßt sein.

## Patentansprüche

1. Beschussfestes Kraftfahrzeug-Innenverkleidungsteil, mit einem flächigen, beschussfesten Faserverbundkörper (9), der zumindest in einem Randbereich ein beschussfestes Stahlblechelement (11) aufweist,
**dadurch gekennzeichnet,**
**dass** das Stahlblechelement (11) mit einem randseitigen Halteabschnitt (13) mit dem Randbereich des flächigen Faserverbundkörpers (9) verbunden ist, und
**dass** das Stahlblechelement (11) einen Randbereich des Innenverkleidungsteils (4) bildet, indem es mit einem zur Anlage und für eine Festlegung an einem Karosserieteil (2) hergerichteten Flanschabschnitt (12) und einem Verbindungsabschnitt (14) zwischen dem Flanschabschnitt (12) und dem Halteabschnitt (13) eine randseitig abstehende Fortsetzung des flächigen Faserverbundkörpers bildet.

2. Beschussfestes Kraftfahrzeug-Innenverkleidungsteil nach Anspruch 1, **dadurch gekennzeichnet, dass** randseitige Abwinkelungen im Stahlblechelement (11 ) gebildet sind.

3. Beschussfestes Kraftfahrzeug-Innenverkleidungsteil nach Anspruch 1 oder Anspruch 2, **dadurch gekennzeichnet, dass** der Halteabschnitt (13) des Stahlblechelements (11) randseitig durch Einbetten in den Randbereich des Faserverbundkörpers damit verbunden ist.

4. Beschussfestes Kraftfahrzeug-Innenverkleidungsteil nach einem der Ansprüche 1 bis 3, **dadurch gekennzeichnet, dass** das Stahlblechelement (11) als Mehrschichtkörper ausgeführt ist.

5. Beschussfestes Kraftfahrzeug-Innenverkleidungsteil nach einem der Ansprüche 1 bis 4, **dadurch gekennzeichnet, dass** am Flanschabschnitt (12) für Befestigungszwecke hergerichtete Lochungen (19) vorgesehen und/oder zum Einsatz in das Karosserieteil (2) hergerichtete Befestigungselemente (18) vormontiert oder angeformt sind.

6. Beschussfestes Kraftfahrzeug-Innenverkleidungsteil nach einem der Ansprüche 1 bis 5, **dadurch gekennzeichnet, dass** ein Dekorbezug (10) vorgesehen ist, der sowohl mit dem Faserverbundkörper (9) als auch mit dem Stahlblechelement (11) verbunden ist.

7. Beschussfestes Kraftfahrzeug-Innenverkleidungsteil nach einem der Ansprüche 1 bis 6, **dadurch gekennzeichnet, dass** an dem Flanschabschnitt (12) eine erste Rücksetzung (17) zur Aufnahme eines umgeschlagenen Randes des Dekorbezuges (10) angeformt ist.

8. Beschussfestes Kraftfahrzeug-Innenverkleidungsteil nach einem der Ansprüche 1 bis 7, **dadurch gekennzeichnet, dass** an dem Halteabschnitt (13) eine zweite Rücksetzung (22) in der Weise angeformt ist, dass zwischen einem nicht in den Faserverbundkörper (9) eingebetteten Teil des Halteabschnitts (13) und dem Faserverbundkörper (9) ein ebener Übergang erstellbar ist.

9. Beschussfestes Kraftfahrzeug-Innenverkleidungsteil nach einem der Ansprüche 1 bis 8, **dadurch gekennzeichnet, dass** ein Teilbereich des Halteabschnittes (13) in den Faserverbundkörper (9) eingebettet ist und der Grenzbereich zwischen dem Faserverbundkörper und dem nicht eingebetteten Teilbereich des Halteabschnittes (13) mit einer Höhenausgleichsbeschichtung (23) versehen ist.

10. Beschussfestes Kraftfahrzeug-Innenverkleidungsteil nach einem der Ansprüche 1 bis 9, **dadurch gekennzeichnet, dass** zur Bildung der Umrandung das Stahlblechelement (11) oder wenigstens eine Blechschicht (11a, 11b, 11 c) des Mehrschichtkörpers (11 ') nach Art eines geschlossenen Rahmens gebildet ist.

11. Beschussfestes Kraftfahrzeug-Innenverkleidungsteil nach Anspruch 10, **dadurch gekennzeichnet, dass** der geschlossene Rahmen einteilig ausgebildet ist.

12. Beschussfestes Kraftfahrzeug-Innenverkleidungsteil nach einem der Ansprüche 1 bis 11, **dadurch gekennzeichnet, dass** im Bereich des Halteabschnittes (13) wenigstens eine Lochung (24) oder Kammstruktur vorgesehen ist, die von dem Faserverbundkörper (9) durchdringbar ist.

13. Beschussfestes Kraftfahrzeug-Innenverkleidungsteil nach einem der Ansprüche 1 bis 12, **dadurch gekennzeichnet, dass** einzelne Blechschichten (11a, 11 b, 11 c) des Stahlblechelements (11) als Stapelpaket zu einem Mehrschichtkörper (11') zusammengefasst sind.

14. Beschussfestes Kraftfahrzeug-Innenverkleidungsteil nach Anspruch 13, **dadurch gekennzeichnet, dass** die Blechschichten (11a, 11b, 11c) untereinander baugleich sind.

15. Beschussfestes Kraftfahrzeug-Innenverkleidungsteil nach Anspruch 13 oder 14, **dadurch gekennzeichnet, dass** die Blechschichten (11a, 11b, 11c) mit Lochungen (19a, 19b, 19c, 24a, 24b, 24c) versehen zu dem Stapelpaket zusammengefasst sind.

16. Beschussfestes Kraftfahrzeug-Innenverkleidungsteil nach einem der Ansprüche 13 bis 15, **dadurch gekennzeichnet, dass** die Blechschichten (11a, 11b, 11c) durch Einbettung in den Faserverbundkörper (9) miteinander verbunden sind.

17. Beschussfestes Kraftfahrzeug-Innenverkleidungsteil nach einem der Ansprüche 13 bis 15, **dadurch gekennzeichnet, dass** die Blechschichten (11a, 11b, 11c) durch Befestigungselemente (18', 18", 18''') am Flanschabschnitt (12) miteinander verbunden sind.

18. Beschussfestes Kraftfahrzeug-Innenverkleidungsteil nach einem der Ansprüche 13 bis 17, **dadurch gekennzeichnet, dass** die Blechschichten (11a, 11 b, 11 c) aus unterschiedlichen Werkstoffen erzeugt sind.

19. Beschussfestes Kraftfahrzeug-Innenverkleidungsteil nach einem der Ansprüche 13 bis 18, **dadurch gekennzeichnet, dass** wenigstens eine (11a) der Blechschichten durch Auftragsbeschichtung an einer anderen (11b) Blechschicht erzeugt ist.

## Claims

1. Bullet-proof interior lining part for a motor vehicle with a flat bullet-proof body (9) of fibrous composite material which has a bullet-proof steel plate element (11) at least in a marginal region,
**characterized in that**
the steel plate element (11) is joined by a marginal holding portion (13) to the marginal region of the flat fibrous composite body (9), and **in that**
the steel plate element (11) forms, by a flange portion (12) made for resting on and fixing to a body part (2) and by a connecting portion (14) between the flange portion (12) and the holding portion (13), a marginally upstanding continuation of the flat fibrous composite body, thus forming a marginal region of the interior lining part (4).

2. Bullet-proof interior lining part for a motor vehicle according to Claim 1, **characterized in that** marginal bends are formed in the steel plate element (11).

3. Bullet-proof interior lining part for a motor vehicle according to Claim 1 or Claim 2, **characterized in that** the holding portion (13) of the steel plate element (11) is marginally joined to the marginal region of the fibrous composite body by embedment therein.

4. Bullet-proof interior lining part for a motor vehicle according to any one of Claims 1 to 3, **characterized in that** the steel plate element (11) is made as a multilayer body.

5. Bullet-proof interior lining part for a motor vehicle according to any one of Claims 1 to 4, **characterized in that** perforations (19) for fixing purposes are provided in, and/or fastening elements (18) for insertion into the body part (2) are preassembled in or formed on, the flange portion (12).

6. Bullet-proof interior lining part for a motor vehicle according to any one of Claims 1 to 5, **characterized in that** a decorative trim (10) joined to both the fibrous composite body (9) and the steel plate element (11) is provided.

7. Bullet-proof interior lining part for a motor vehicle according to any one of Claims 1 to 6, **characterized in that** a first joggle (17) intended to receive a folded-back edge of the decorative trim (10) is formed on the flange portion (12).

8. Bullet-proof interior lining part for a motor vehicle according to any one of Claims 1 to 7, **characterized in that** a second joggle (22) is formed on the holding portion (13) so that a smooth transition can be made between a part of the holding portion (13) that is not embedded in the fibrous composite body (9) and the fibrous composite body (9).

9. Bullet-proof interior lining part for a motor vehicle according to any one of Claims 1 to 8, **characterized in that** a part-region of the holding portion (13) is embedded in the fibrous composite body (9) and the boundary zone between the fibrous composite body and the non-embedded part-region of the holding portion (13) is provided with a height-compensating coating (23).

10. Bullet-proof interior lining part for a motor vehicle according to any one of Claims 1 to 9, **characterized in that** to form the edging, the steel plate element (11) or at least one plate layer (11a, 11b, 11c) of the multilayer body (11') is formed in the manner of a closed frame.

11. Bullet-proof interior lining part for a motor vehicle according to Claim 10, **characterized in that** the closed frame is made in one piece.

12. Bullet-proof interior lining part for a motor vehicle according to any one of Claims 1 to 11, **characterized in that** at least one perforation (24) or slot structure which is penetrable by the fibrous composite body (9) is provided in the region of the holding portion (13).

13. Bullet-proof interior lining part for a motor vehicle according to any one of Claims 1 to 12, **characterized in that** individual plate layers (11 a, 11 b, 11c) of the steel plate element (11) are combined as a stacked set to form a multilayer body (11').

14. Bullet-proof interior lining part for a motor vehicle according to Claim 13, **characterized in that** the plate layers (11 a, 11 b, 11 c) are identical to each other.

15. Bullet-proof interior lining part for a motor vehicle according to Claim 13 or Claim 14, **characterized in that** the plate layers (11a, 11 b, 11c) are provided with perforations (19a, 19b, 19c, 24a, 24b, 24c) before being combined as a stacked set.

16. Bullet-proof interior lining part for a motor vehicle according to any one of Claims 13 to 15, **characterized in that** the plate layers (11 a, 11 b, 11c) are joined together by embedment in the fibrous composite body (9).

17. Bullet-proof interior lining part for a motor vehicle according to any one of Claims 13 to 15, **characterized in that** the plate layers (11a, 11b, 11c) are joined together by being fastened to the flange portion (12) with fastening elements (18', 18", 18''').

18. Bullet-proof interior lining part for a motor vehicle according to any one of Claims 13 to 17, **characterized in that** the plate layers (11a, 11b, 11c) are made of different materials.

19. Bullet-proof interior lining part for a motor vehicle according to any one of Claims 13 to 18, **characterized in that** at least one of the plate layers (11a) is produced by being deposited on to another plate layer (11 b).

## Revendications

1. Élément de revêtement interne blindé destiné à un véhicule automobile, avec un corps composite à base de fibres (9) blindé, présentant au moins un élément en tôle d'acier (11) blindé, dans une zone de bordure,
**caractérisé en ce que**
l'élément en tôle d'acier (11), comportant un tronçon de maintien (13) situé côté bordure, est relié à la zone de bordure du corps composite à base de fibres (9) plat, et
et **en ce que** l'élément en tôle d'acier (11) forme une zone de bordure de la partie de revêtement interne, **en ce qu'**il forme, par un tronçon de rebord (12) agencé sur une partie de carrosserie (2) pour assurer un appui et une fixation et, par un tronçon de liaison (14) entre le tronçon de rebord (12) et le tronçon de maintien (13), un prolongement en saillie en bordure du corps composite à base de fibres, plat.

2. Élément de revêtement interne blindé destiné à un véhicule automobile selon la revendication 1, **caractérisé en ce que** des coudages sont formés côté bordure dans l'élément en tôle d'acier (11).

3. Élément de revêtement interne blindé destiné à un véhicule automobile selon la revendication 1 ou la revendication 2, **caractérisé en ce que** le tronçon de maintien (13) de l'élément en tôle d'acier (11) est relié côté bordure par intégration dans la zone de bordure du corps composite à base de fibres, à celui-ci.

4. Élément de revêtement interne blindé destiné à un véhicule automobile selon l'une des revendications 1 à 3, **caractérisé en ce que** l'élément en tôle d'acier (11) est réalisé sous la forme de corps stratifié.

5. Élément de revêtement interne blindé destiné à un véhicule automobile selon l'une des revendications 1 à 4, **caractérisé en ce que** des perçages (19), ménagés à des fins de fixation, sont prévus sur le tronçon de rebord (12) et/ou des éléments de fixation (18) sont pré-montés ou formés d'un seul tenant, pour insertion dans la partie de carrosserie (2).

6. Élément de revêtement interne blindé destiné à un véhicule automobile selon l'une des revendications 1 à 5, **caractérisé en ce qu'**un revêtement de décoration (10) est prévu, relié tant au corps composite à base de fibres (9), qu'également à l'élément en tôle d'acier (11).

7. Élément de revêtement interne blindé destiné à un véhicule automobile selon l'une des revendications 1 à 6, **caractérisé en ce que**, sur le tronçon de rebord (12) est formé d'un seul tenant un premier retrait (17) servant à recevoir un bord rabattu du revêtement de décoration (10).

8. Élément de revêtement interne blindé destiné à un véhicule automobile selon l'une des revendications 1 à 7, **caractérisé en ce que**, sur le tronçon de maintien (13), est formé d'un seul tenant un deuxième retrait (22), de manière qu'entre une partie, non incorporée dans le corps composite à base de fibres (9) du tronçon de maintien (13), et le corps composite à base de fibres (9) soit susceptible d'être établie une transition plane.

9. Élément de revêtement interne blindé destiné à un véhicule automobile selon l'une des revendications 1 à 8, **caractérisé en ce qu'**une zone partielle du tronçon de maintien (13) est incorporée dans le corps composite à base de fibres (9), et la zone limite entre le corps composite à base de fibres et la zone partielle non incorporée du tronçon de maintien (13) est munie d'un revêtement compensateur de hauteur (23).

10. Élément de revêtement interne blindé destiné à un véhicule automobile selon l'une des revendications 1 à 9, **caractérisé en ce que**, pour former le pourtour, l'élément en tôle d'acier (11) ou au moins une couche en tôle (11a, 11b, 11c) du corps stratifié (11') est formé(e) à la façon d'un cadre fermé.

11. Élément de revêtement interne blindé destiné à un véhicule automobile selon la revendication 10, **caractérisé en ce que** le cadre fermé est réalisé d'une seule pièce.

12. Élément de revêtement interne blindé destiné à un véhicule automobile selon l'une des revendications 1 à 11, **caractérisé en ce que**, dans la zone du tronçon de maintien (13), au moins un perçage (14) et/ou une structure en peigne est prévu(e), pouvant être traversée par le corps composite à base de fibres (9).

13. Élément de revêtement interne blindé destiné à un véhicule automobile selon l'une des revendications 1 à 12, **caractérisé en ce que** différentes couches de tôle (11a, 11b, 11c) de l'élément en tôle d'acier (11 ) sont regroupées sous forme d'un paquet empilé pour donner un corps stratifié (11').

14. Élément de revêtement interne blindé destiné à un véhicule automobile selon la revendication 13, **caractérisé en ce que** les couches de tôle (11a, 11b, 11c) sont entre elles de même construction.

15. Élément de revêtement interne blindé destiné à un véhicule automobile selon la revendication 13 ou 14, **caractérisé en ce que** les couches de tôle (11a, 11b, 11c) sont munies de perçages (19a, 19b, 19c, 24a, 24b, 24c), et regroupées pour former le paquet d'empilement.

16. Élément de revêtement interne blindé destiné à un véhicule automobile selon l'une des revendications 13 à 15, **caractérisé en ce que** les couches de tôle (11a, 11b, 11c) sont reliées entre elles par incorporation dans les corps composites à base de fibres (9).

17. Élément de revêtement interne blindé destiné à un véhicule automobile selon l'une des revendications 13 à 15, **caractérisé en ce que** les couches de tôle (11a, 11b, 11c) sont reliées ensemble par des éléments de fixation (18', 18", 18''') sur le tronçon de rebord (12).

18. Élément de revêtement interne blindé destiné à un véhicule automobile selon l'une des revendications 13 à 17, **caractérisé en ce que** les couches de tôle (11a, 11b, 11 c) sont produites à partir de matériaux différents.

19. Élément de revêtement interne blindé destiné à un véhicule automobile selon l'une des revendications 13 à 18, **caractérisé en ce qu'**au moins l'une (11a) des couches de tôle est produite par un revêtement rapporté sur une autre (11b) couche de tôle.
